# EUROPÄISCHE PATENTSCHRIFT

(11) **EP 3 710 356 B1**
(45) Veröffentlichungstag und Bekanntmachung des Hinweises auf die Patenterteilung: **10.11.2021**
(21) Anmeldenummer: 18815672.3
(22) Anmeldetag: 07.12.2018
(51) Int. Cl.: B64C 13/24

(54) **DYNAMISCHE RÜCKLAUFBREMSE MIT DÄMPFUNGSELEMENT**
DYNAMIC NON RETURN MECHANISM WITH DAMPER ELEMENT
ÉLEMENT MÉCHANIQUE DE BLOCAGE DE RETOUR AVEC ÉLEMENT D'ATTÉNUATION

(30) Priorität: 08.12.2017 DE 102017129235
(43) Veröffentlichungstag der Anmeldung: 23.09.2020
(73) Patentinhaber: Liebherr-Aerospace Lindenberg GmbH, 88161 Lindenberg/Allgäu (DE)
(72) Erfinder: GAILE, Anton, 88299 Leutkirch (DE)
(74) Vertreter: Herrmann, Uwe
(86) Internationale Anmeldenummer: PCT/EP2018/083936
(87) Internationale Veröffentlichungsnummer: WO 2019/110782

(56) Entgegenhaltungen:
- EP-A2- 0 243 050
- FR-A1- 2 424 445
- US-A- 4 169 523
- US-A- 4 483 429

## Beschreibung

Die Erfindung betrifft eine mechanische Rücklaufsperre für eine Fluggeräteanwendung, wobei die Fluggeräteanwendung Teil einer Flugsteuerung sein kann. Die Rücklaufsperre umfasst wenigstens eine Konstantbremse, wenigstens eine Hauptbremse und wenigstens einen Kugelrampenmechanismus.

Gattungsgemäße Rücklaufsperren beziehungsweise Rücklaufbremsen oder Noback-brakes sind aus dem Stand der Technik bekannt und dienen dazu, einen Verbraucher bzw. Aktuator eines Fluggeräts von einem Antrieb bzw. von einer Energiequelle zu entkoppeln. Dies kann insbesondere in einem Überlastfall oder in einem Schadensfall der jeweiligen Vorrichtung erforderlich sein.

Es ist bekannt, Fluggeräteanwendungen wie primäre oder sekundäre Steuerungen des Fluggeräts über eine entsprechende Rücklaufsperre mit einem Antrieb zu koppeln. Wenn es im Betrieb des Fluggeräts zu einer Beschädigung des Antriebs oder der Zerstörung einer Antriebswelle zwischen dem Antrieb und dem Abtrieb kommt, so stellt die Rücklaufsperre sicher, dass die Abtriebsseite der Fluggeräteanwendung festgestellt ist und so das Flugverhalten des Fluggeräts nicht nachteilig beeinflussen kann.

Ein Problem bei derartigen Rücklaufbremsen besteht darin, dass sie anfällig für Schwingungen beziehungsweise sogenanntes Chatter sind. Dies gilt insbesondere dann, wenn eine Folgelast auftritt.

EP 0 243 050 A2 offenbart eine Rotationsübertragungseinheit, die eine Eingangsrampenplatte, eine Ausgangsrampenplatte, eine Anzahl von verschiebbaren Elementen, die zwischen den Rampenplatten angeordnet sind, eine Bremseinrichtung zum Aufbringen eines Bremsmoments auf die Ausgangsrampenplatte umfasst und einen Ableiter, der so angeordnet ist, dass er eine Drehmomentlast auf die Eingangsrampenplatte ausübt. Der Ableiter ist so ausgelegt, dass er durch Anlegen eines kontinuierlichen Bremsmoments an die Eingangswelle arbeitet, und die Bremseinrichtung ist so ausgelegt, dass sie durch die relative Drehung der Eingangsrampenplatte in Bezug auf die Ausgangsrampenplatte betätigt wird. Das vom Ableiter auf die Eingangswelle ausgeübte Drehmoment reicht nicht aus, um eine Drehung der Welle zu verhindern, reicht jedoch aus, um die Schwankungen des auf die Eingangswelle ausgeübten Antriebs zu dämpfen.

Vor diesem Hintergrund ist es Aufgabe der Erfindung, eine verbesserte Rücklaufsperre bereitzustellen, bei der insbesondere die Neigung zu den genannten Schwingungen verringert ist.

Diese Aufgabe wird erfindungsgemäß durch eine mechanische Rücklaufsperre mit den Merkmalen des Anspruchs 1 gelöst. Vorteilhafte Ausgestaltungen sind Gegenstand der Unteransprüche.

Die mechanische Rücklaufsperre gemäß Anspruch 1 ist insbesondere für Fluggeräteanwendungen vorgesehen, die Teil einer Flugsteuerung sein können. Die Flugsteuerung kann eine primäre und/oder sekundäre Flugsteuerung sein und Klappen oder sonstige verstellbare Steuerflächen umfassen, die das Flugverhalten des Fluggeräts verändern können.

Die Rücklaufsperre umfasst wenigstens eine Konstantbremse, wenigstens eine Hauptbremse und wenigstens einen Kugelrampenmechanismus. Die beiden Bremsen und der Kugelrampenmechanismus können koaxial gelagert und/oder axial voneinander beabstandet sein. Erfindungsgemäß ist vorgesehen, dass die Hauptbremse und die Konstantbremse mittels wenigstens einer Reibscheibe miteinander gekoppelt sind. Die Reibscheibe und/oder ein sonstiges Dämpfungselement können die Schwingung insbesondere zwischen den beiden Bremsen stark reduzieren.

In einer bevorzugten Ausführung der Erfindung ist denkbar, dass die Hauptbremse und die Konstantbremse in axialer Richtung der Rücklaufsperre voneinander beabstandet sind.

In einer weiteren Ausführung ist denkbar, dass die Reibscheibe in axialer Richtung der Rücklaufsperre zwischen der Hauptbremse und der Konstantbremse und/oder zwischen zwei Teilen des Kugelrampenmechanismus angeordnet ist. Der Begriff der Reibscheibe ist somit breit zu verstehen und die Reibscheibe kann mehrteilig ausgebildet sein bzw. mehrere getrennte Reibscheiben umfassen, wobei die einzelnen Teile beabstandet und/oder durch andere Komponenten getrennt voneinander angeordnet sein können.

Die Dämpfung der beiden Bremsen kann somit unmittelbar durch eine dazwischen angeordnete Reibscheibe und/oder mittelbar durch eine zwischen zwei Teilen des Kugelrampenmechanismus angeordnete Reibscheibe erfolgen. Bei den beiden Teilen des Kugelrampenmechanismus kann es sich um die beiden Rampen aufweisenden und axial voneinander beabstandeten beziehungsweise gegenüberliegenden Komponenten handeln, zwischen denen die Kugeln des Kugelrampenmechanismus positioniert sind.

In einer weiteren bevorzugten Ausführung der Erfindung ist denkbar, dass die Konstantbremse in axialer Richtung der Rücklaufsperre zwischen der Reibscheibe und dem Kugelrampenmechanismus angeordnet ist.

Vorzugsweise ist vorgesehen, dass die Reibscheibe sich radial auf der Welle abstützt.

In einer weiteren bevorzugten Ausführung der Erfindung ist denkbar, dass die Reibscheibe einen hohlzylinderförmig ausgebildeten radial äußeren Bereich umfasst, der sich in axialer Richtung weiter erstreckt als ein radial innerer Bereich der Reibscheibe. Der radial äußere Bereich der Reibscheibe kann in einer besonders bevorzugten Ausführung dazu ausgebildet sein, in Kontakt mit der Hauptbremse und der Konstantbremse zu sein. Der Kontakt kann dabei dauerhaft beziehungsweise durch Form- oder Stoffschluss hervorgerufen sein oder durch Kraftschluss verursacht sein, welcher beispielsweise durch eine Federeinrichtung die hierfür notwendige Kraft erhält.

In einer weiteren bevorzugten Ausführung der Erfindung ist denkbar, dass der radial äußere Bereich der Reibscheibe die gleiche radiale Position wie die Kugeln des Kugelrampenmechanismus und/oder die Kontaktbereiche der Konstantbremse und/oder der Hauptbremse aufweist.

Durch diese gleiche radiale Positionierung der genannten Komponenten kann ein möglichst gleichmäßiger in der axialen Richtung der Vorrichtung gerichteter Kraftfluss durch diese Komponenten gewährleistet werden. Der Kraftfluss kann insbesondere parallel zur Achse der Rücklaufsperre gerichtet sein. Die Kontaktbereiche der Bremsen bezeichnen vorliegend diejenigen Bereiche, in denen beispielsweise Bremsscheiben mit Bremsbacken oder sonstige aufeinander wirkende Komponenten der Bremsen zum Ausüben einer Bremskraft miteinander in Kontakt sind.

In einer weiteren bevorzugten Ausführung der Erfindung ist denkbar, dass die Konstantbremse über eine Verzahnung mit einem Teil des Kugelrampenmechanismus und die Hauptbremse mit einem anderen Teil des Kugelrampenmechanismus gekoppelt ist. Bei den beiden Teilen des Kugelrampenmechanismus kann es sich um die mittels der Kugeln des Kugelrampenmechanismus koppelbaren, voneinander axial beabstandeten Teile des Kugelrampenmechanismus handeln. Die Reibscheibe kann somit eine mittelbare Verbindung der beiden Teile des Kugelrampenmechanismus sein, wobei die beiden Teile des Kugelrampenmechanismus mittelbar über die Hauptbremse und die Konstantbremse mit der Reibscheibe gekoppelt sind.

In einer weiteren bevorzugten Ausführung der Erfindung ist denkbar, dass die Reibscheibe einen darauf aufgebrachten Reibbelag umfasst. Die Reibscheibe kann in einer weiteren bevorzugten Ausführung aus Bronze gefertigt sein.

Die Rücklaufsperre kann Mittel aufweisen, durch die erreicht wird, dass die Reibung proportional zum anliegenden Drehmoment ist.

Die Rücklaufsperre kann Mittel aufweisen, durch die erreicht wird, dass die Reibung zwischen den Kugelrampenteilen des Kugelrampenmechanismus als konstante Reibung aufgebracht wird.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Vorteile und Einzelheiten der Erfindung sind anhand der in den Figuren beispielhaft gezeigten Ausführungen erläutert. Dabei zeigen:
- Figur 1:: eine Querschnittansicht einer erfindungsgemäßen Rücklaufsperre und
- Figur 2:: eine Querschnittansicht einer aus dem Stand der Technik bekannte Rücklaufsperre.

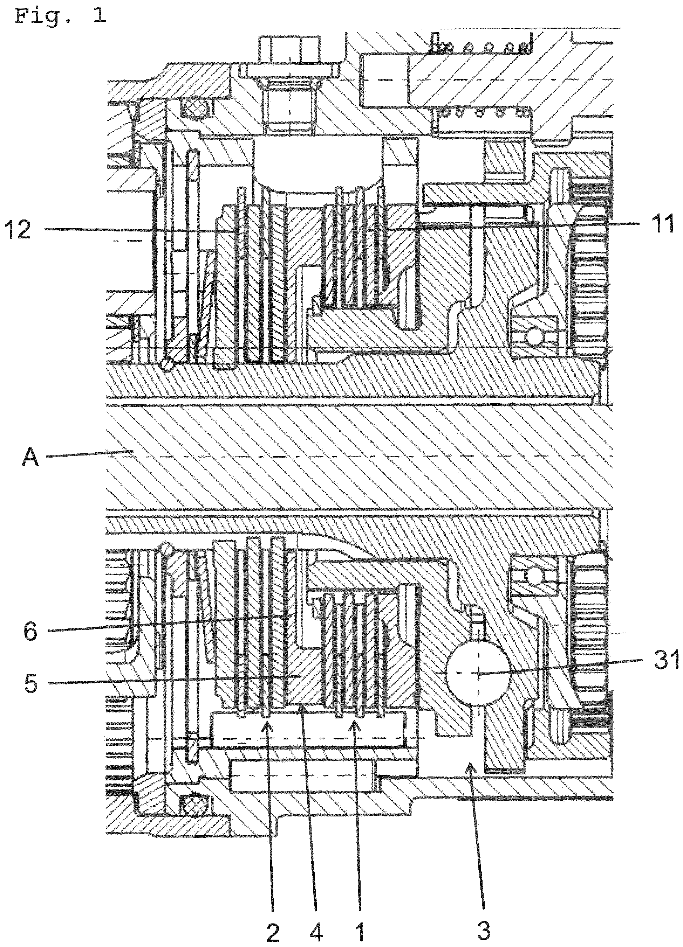

Figur 1 zeigt eine Schnittansicht einer erfindungsgemäßen Rücklaufsperre für eine Fluggeräteanwendung. Bei der Fluggeräteanwendung kann es sich beispielsweise um eine Flugsteuerung wie eine primäre oder sekundäre Flugsteuerung eines Fluggeräts handeln. Die Fluggeräteanwendung kann auch als Teil bzw. eine Unterkomponente einer entsprechenden Flugsteuerung verstanden werden.

Die Rücklaufsperre umfasst wenigstens eine Konstantbremse 1, beziehungsweise drag brake 1, wenigstens eine Hauptbremse 2 beziehungsweise main brake 2 und wenigstens einen Kugelrampenmechanismus 3 beziehungsweise eine ball ramp 3. Erfindungsgemäß ist vorgesehen, dass die Hauptbremse 2 und die Konstantbremse 1 mittels wenigstens einer Reibscheibe 4 miteinander gekoppelt sind. Die Reibscheibe 4 kann als Dämpfer funktionieren beziehungsweise als Dämpfer ausgebildet sein.

Die erfindungsgemäße Rücklaufsperre ist eine mechanische Rücklaufsperre für Drehbewegungen. Gattungsgemäße Rücklaufsperren sind dazu ausgebildet auch dynamisch zu funktionieren.

Dies bedeutet, dass die Rücklaufsperre auch unter Drehzahl beziehungsweise während einer übertragenen Drehbewegung die komplette Energie, welche von der Abtriebsseite der Rücklaufsperre zugeführt wird, wegbremsen beziehungsweise in Wärme umwandeln kann.

Bei einem derartigen dynamischen Betriebsfall der Rücklaufbremse kommt es in dem aus dem Stand der Technik bekannten Ausführungen häufig zu einem Rattern beziehungsweise "chatter" der Rücklaufsperre, welches sich zum einen in einem lauten Geräusch, dem chatter, und zum anderen in Form von Drehmomentspitzen im System bemerkbar macht.

Gattungsgemäße Rücklaufsperren werden in einer Vielzahl von Fluggeräten beziehungsweise Flugzeugen eingesetzt, um in einem Fehlerfall wie zum Beispiel nach einem Bruch eines mit der Rücklaufsperre gekoppelten Schaftsystems oder nach dem Ausfall eines mit der Rücklaufsperre gekoppelten Antriebssystems ein oder mehrere Geräte beziehungsweise Abtriebe oder Verbraucher in deren aktueller Position zu halten und so das Flugverhalten des Fluggeräts zu stabilisieren. Gattungsgemäße Systeme werden zum Beispiel in Landeklappenantrieben oder Trimmaktuatoren eingesetzt.

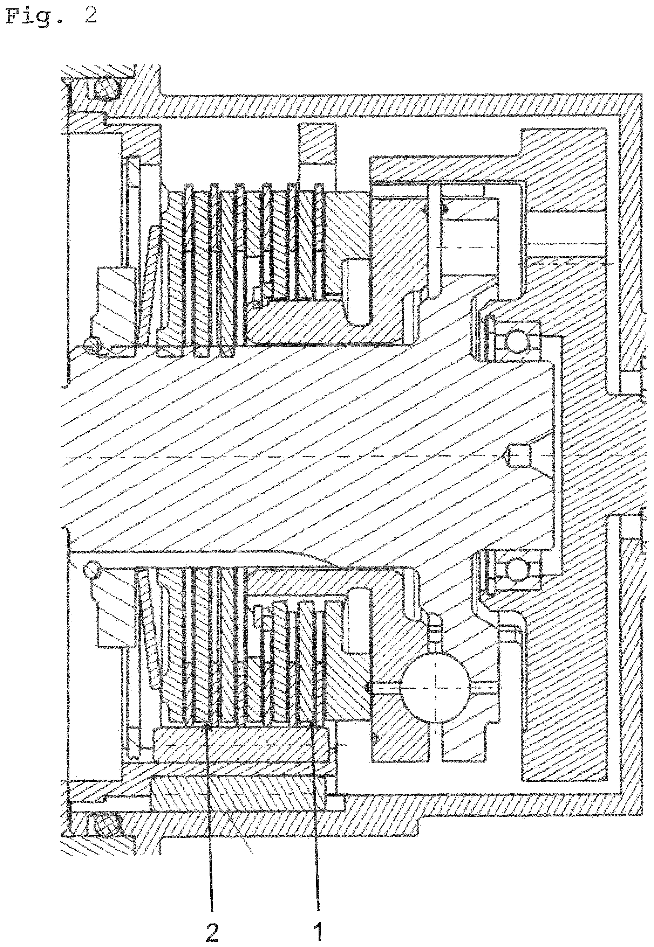

Die erfindungsgemäß vorgesehene Reibscheibe 4 stellt eine Reibkopplung zwischen der Hauptbremse 2 und der Konstantbremse 1 dar. Gemäß dem in Figur 2 gezeigten Stand der Technik ist zwischen der Konstantbremse 1 und der Hauptbremse 2 eine Statorscheibe eingebracht, welche nicht dazu ausgelegt ist, das Schwingungsverhalten zwischen den beiden Bremsen 1, 2 wirksam zu dämpfen.

Dem gegenüber weist die erfindungsgemäße Rücklaufsperre eine zwischen den Bremsen 1, 2 vorgesehene Reibscheibe 4 beziehungsweise Dämpfung 4 auf, die durch ihr Dämpfverhalten Schwingungen zwischen den Bremsen 1, 2 reduziert.

Die beiden Bremsen 1, 2 können dabei in axialer Richtung voneinander beabstandet sein und die Reibscheibe 4 kann in axialer Richtung zwischen den beiden Bremsen 1, 2 angeordnet sein. Die axiale Richtung entspricht der mit dem Bezugszeichen A gekennzeichneten Achse der Rücklaufsperre. Statt zwischen den beiden Bremsen 1, 2 kann die Reibscheibe 4 zwischen zwei Teilen des Kugelrampenmechanismus 3 angeordnet sein. Dies ist in den Figuren nicht näher gezeigt.

Bei der in Figur 1 gezeigten Ausführung der Erfindung ist die Konstantbremse 1 in axialer Richtung der Rücklaufsperre zwischen der Reibscheibe 4 und dem Kugelrampenmechanismus 3 angeordnet.

Die Reibscheibe 4 umfasst einen hohlzylinderförmig ausgebildeten radial äußeren Bereich 5, der sich in axialer Richtung weiter erstreckt als ein radial innerer Bereich 6 der Reibscheibe. Der radial äußere Bereich 5 der Reibscheibe 4 ist dazu ausgebildet, in Kontakt mit der Hauptbremse 2 und der Konstantbremse 1 zu stehen. Über den axial äußeren Bereich 5 können Kräfte zwischen den beiden Bremsen 1, 2 übertragen werden. Der radial äußere Bereich 5 der Reibscheibe 4 kann wie der Figur 1 entnehmbar ist die gleiche radiale Position beziehungsweise den gleichen Abstand von der Drehachse der Rücklaufsperre aufweisen, wie die Kugeln 31 des Kugelrampenmechanismus 3 und/oder die Kontaktbereiche 11, 12 der Konstantbremse 1 und der Hauptbremse 2. Hierdurch wird eine möglichst gradlinige Kraftübertragung zwischen den genannten Komponenten ermöglicht.

Die Konstantbremse 1 kann über eine Verzahnung mit einem Teil des Kugelrampenmechanismus 3 und die Hauptbremse 2 mit einem anderen Teil des Kugelrampenmechanismus 3 gekoppelt sein.

Die Reibscheibe 4 kann einen darauf angebrachten und in den Figuren nicht gezeigten Reibbelag umfassen. Die Reibscheibe 4 kann beispielsweise aus Bronze gefertigt sein.

Die Rücklaufsperre kann eine selbstverstärkende Scheibenbremse umfassen, bei der Teile des Kugelrampenmechanismus 3 dazu genutzt werden, ein von der Abtriebsseite bereitgestelltes Drehmoment in eine Bremskraft umzusetzen. Die Rücklaufsperre lenkt von der Abtriebsseite eingebrachte Lasten und insbesondere auch unterstützende Betriebslasten in das Gehäuse der Rücklaufsperre ab.

Die Rücklaufsperre umfasst zwei Bremsabschnitte. Der erste Abschnitt umfasst die Konstantbremse 1, die ein selbstverstärkendes Reibdrehmoment während aller normalen Betriebsbedingungen der Rücklaufsperre stellt. Der zweite Abschnitt umfasst die Hauptbremse 2, und wirkt in Gegenwart eines von der Abtriebsseite bereitgestellten Drehmoments beziehungsweise einer Last oder während des Betriebs mit unterstützenden Lasten beziehungsweise Drehmomenten, die in die gleiche Richtung wie das über die Rücklaufsperre übertragene Antriebsdrehmoment gerichtet sind. Die Reibscheibe 4 zwischen den beiden Bremsen 1, 2 wirkt dem Rattern der gesamten Rücklaufsperre entgegen.

Bei normalem Betrieb der Rücklaufsperre und entgegenwirkenden Abtriebsdrehmomenten kann vorgesehen sein, dass ein Mitnehmer beide Teile des Kugelrampenmechanismus, also eine Kugelrampenscheibe und eine Reaktionsscheibe, zusammentreibt. Die Bälle des Kugelrampenmechanismus verbleiben innerhalb ihrer Ausnehmungen und die Hauptbremse bremst nicht. Die Konstantbremse verbleibt in einer Eingriffsposition durch nicht gezeigte Druckfedern umso eine geringe Bremswirkung bereitzustellen.

In einer weiteren Positition wirken das Antriebsdrehmoment und die von der Abtriebsseite eingeführten Drehmomente in dieselbe Richtung.

In einer normalen Betriebssituation mit unterstützenden Drehmomenten der Abtriebsseite wirkt der Mitnehmer nur auf die Reaktionsscheibe. Die Kugeln rollen die Rampen des Kugelrampenmechanismus hoch, wobei die hochgerollte Strecke proportional zur Größe des unterstützenden Drehmoments ist und hierdurch die Bremse betätigt wird. Das von der PDU bereitgestellte Drehmoment entsperrt die Bremse indem es eine Drehmomentdifferenz bereitstellt, die der Differenz zwischen der von der Bremse und von der Abtriebsseite erzeugten Drehmoments entspricht.

Weiterhin ist ein Zustand möglich, in dem die Rücklaufsperre von einem Antrieb getrennt ist.

In einem entsprechenden getrennten Zustand rollen die Kugeln die Rampen proportional zum Betrag des Abtriebsdrehmoments und betätigen die Bremse um die Last in die Struktur beziehungsweise das Gehäuse der Rücklaufsperre zu leiten. Während einer normalen Flugsituation, in der Landeklappen oder sonstige Abtriebselemente nicht bewegt werden hält die Rücklaufsperre diese Abtriebselemente auf gleiche Weise in ihrer Position fest.

Erfindungsgemäß ist es möglich die Relativbewegungen zwischen den beiden Bremsscheibenpaketen der Bremsen 1, 2 zu dämpfen. Da die Konstantbremse 1 über eine Verzahnung mit einer Seite der Kugelrampe 3 und die Hauptbremse 2 mit der zweiten Seite der Kugelrampe 3 verbunden ist, wird durch diese Kopplung auch die Bewegung der Kugelrampenteile gegeneinander wirkungsvoll gedämpft. Dies wiederum führt zu einem Unterdrücken des Ratterns da beim Rattern die Kugelrampenteile gegeneinander schwingen beziehungsweise das Rattern eine Folge der Relativbewegung zwischen den beiden Kugelrampenteilen ist.

Abweichend zum dargestellten Design kann die Reibkopplung auch direkt zwischen den Kugelrampenteilen erfolgen, sie kann wahlweise proportional zur anliegenden Last wie in den Figuren dargestellt oder als feste Reibung zwischen den beiden Bauteilen eingebaut werden.

Erfindungsgemäß ist es möglich, Kugelrampenteile des Kugelrampenmechanismus 3 über Reibung miteinander zu koppeln. Dabei ist es möglich, dass die Reibung proportional zum anliegenden Drehmoment zunimmt. Es ist auch denkbar, dass die Reibung zwischen den Kugelrampenteilen als konstante Reibung aufgebracht wird. In einer ebenfalls nicht gezeigten Ausführung ist denkbar, dass die Reibkopplung zwischen Konstantbremse und Hauptbremse mittels mehrerer Reibscheiben mit oder ohne Reibbelag erfolgt.

## Patentansprüche

1. Mechanische Rücklaufsperre für eine Ffuggeräteanwendung, wobei die Fluggeräteanwendung Teil einer Flugsteuerung sein kann, umfassend wenigstens eine Konstantbremse (1), wenigstens eine Hauptbremse (2) und wenigstens einen Kugelrampmechanismus (3), **dadurch gekennzeichnet, dass** die Hauptbremse und die Konstantbremse mittels wenigstens einer Reibscheibe (4) miteinander gekoppelt sind.

2. Mechanische Rücklaufsperre nach Anspruch 1, **dadurch gekennzeichnet, dass** die Reibscheibe (4) In axialer Richtung der Rücklaufsperre zwischen der Hauptbremse (2) und der Konstantbremse (1) und/oder zwischen zwei Teilen des Kugelrampenmechanismus (3) angeordnet ist.

3. Mechanische Rücklaufsperre nach einem der vorhergehenden Ansprüche, **dadurch gekennzeichnet, dass** die Konstantbremse (1) in axialer Richtung der Rücklaufsperre zwischen der Reibscheibe (4) und dem Kugelrampenmechanismus (3) angeordnet ist

4. Mechanische Rücklaufsperre nach einem der vorhergehenden Ansprüche, **dadurch gekennzeichnet, dass** die Reibscheibe (4) einen vorzugsweise hohlzylinderförmlg ausgebildeten Bereich umfasst, der sich in radialer Richtung auf der Welle abstützt.

5. Mechanische Rücklaufsperre nach einem der vorhergehenden Ansprüche, **dadurch gekennzeichnet, dass** die Hauptbremse (2) und die Konstantbremse (1) in axialer Richtung der Rücklaufsperre voneinander beabstandet sind.

6. Mechanische Rücklaufsperre nach einem der vorhergehenden Ansprüche, **dadurch gekennzeichnet, dass** der radial äußere Bereich der Reibscheibe (4) dazu ausgebildet ist, in Kontakt mit der Hauptbremse (2) und der Konstantbremse (1) zu sein.

7. Mechanische Rücklaufsperre nach einem der vorhergehenden Ansprüche, **dadurch gekennzeichnet, dass** der radial äußere Bereich der Reibscheibe (4) die gleiche radiale Position wie die Kugeln des Kugelrampenmechanismus (3) und/oder die Kontaktbereiche der Konstantbremse (1) und/oder der Hauptbremse (2) aufweist.

8. Mechanische Rücklaufsperre nach einem der vorhergehenden Ansprüche, **dadurch gekennzeichnet, dass** die Konstantbremse (1) über eine Verzahnung mit einem Teil des Kugelrampenmechanismus (3) und die Hauptbremse (2) mit einem anderen Teil des Kugelrampenmechanismus gekoppelt ist.

9. Mechanische Rücklaufsperre nach einem der vorhergehenden Ansprüche, **dadurch gekennzeichnet, dass** die Reibscheibe (4) einen darauf aufgebrachten Reibbelag umfasst.

10. Mechanische Rücklaufsperre nach einem der vorhergehenden Ansprüche, **dadurch gekennzeichnet, dass** die Reibscheibe (4) aus Bronze gefertigt ist.

11. Mechanische Rücklaufsperre nach einem der vorhergehenden Ansprüche, **dadurch gekennzeichnet, dass** die Rücklaufsperre derart ausgebildet ist, dass dass die Reibung proportional zum anliegenden Drehmoment ist.

12. Mechanische Rücklaufsperre nach einem der vorhergehenden Ansprüche, **dadurch gekennzeichnet, dass** die Rücklaufsperre derart ausgebildet ist, dass die Reibung zwischen den Kugelrampenteilen als konstante Reibung aufgebracht wird.

## Claims

1. A mechanical non-return mechanism for an aircraft application, wherein the aircraft application can be part of a flight control, comprising at least one drag brake (1), at least one main brake (2), and at least one ball ramp mechanism (3), **characterized in that** the main brake and the drag brake are coupled to one another by means of at least one friction washer.

2. A mechanical non-return mechanism in accordance with claim 1, **characterized in that** the friction washer (4) is arranged between the main brake (2) and the drag brake (1) and/or between two parts of the ball ramp mechanism (3) in the axial direction of the non-return mechanism.

3. A mechanical non-return mechanism in accordance with one of the preceding claims, **characterized in that** the drag brake (1) is arranged between the friction washer (4) and the ball ramp mechanism (3) in the axial direction of the non-return mechanism.

4. A mechanical non-return mechanism in accordance with one of the preceding claims, **characterized in that** the friction washer (4) comprises a region that is preferably configured as hollow cylindrical and that is supported on the shaft in the radial direction.

5. A mechanical non-return mechanism in accordance with one of the preceding claims, **characterized in that** the main brake (2) and the drag brake (1) are spaced apart from one another in the axial direction of the non-return mechanism.

6. A mechanical non-return mechanism in accordance with one of the preceding claims, **characterized in that** the radially outer region of the friction washer (4) is configured to be in contact with the main brake (2) and with the drag brake (1).

7. A mechanical non-return mechanism in accordance with one of the preceding claims, **characterized in that** the radially outer region of the friction washer (4) has the same radial position as the balls of the ball ramp mechanism (3) and/or the contact regions of the drag brake (1) and/or of the main brake (2).

8. A mechanical non-return mechanism in accordance with one of the preceding claims, **characterized in that** the drag brake (1) is coupled to a part of the ball ramp mechanism (3) via a toothed arrangement and the main brake (2) is coupled to another part of the ball ramp mechanism.

9. A mechanical non-return mechanism in accordance with one of the preceding claims, **characterized in that** the friction washer (4) comprises a friction lining applied to it.

10. A mechanical non-return mechanism in accordance with one of the preceding claims, **characterized in that** the friction washer (4) is produced from bronze.

11. A mechanical non-return mechanism in accordance with one of the preceding claims, **characterized in that** the non-return mechanism is configured such that the friction is proportional to the applied torque.

12. A mechanical non-return mechanism in accordance with one of the preceding claims, **characterized in that** the non-return mechanism is configured such that the friction between the ball ramp parts is applied as a constant friction.

## Revendications

1. Élément mécanique de blocage de retour pour une application pour appareil volant, dans lequel l'application pour appareil volant peut faire partie d'un système de commandes de vol, comprenant au moins un frein continu (1), au moins un frein principal (2) et au moins un mécanisme de rampe à billes (3),
**caractérisé en ce que** le frein principal et le frein continu sont couplés l'un à l'autre au moyen d'au moins un disque de friction (4).

2. Élément mécanique de blocage de retour selon la revendication 1,
**caractérisé en ce que** le disque de friction (4) est disposé, dans la direction axiale de l'élément de blocage de retour, entre le frein principal (2) et le frein continu (1) et/ou entre deux parties du mécanisme de rampe à billes (3).

3. Élément mécanique de blocage de retour selon l'une des revendications précédentes,
**caractérisé en ce que** le frein continu (1) est disposé, dans la direction axiale de l'élément de blocage de retour, entre le disque de friction (4) et le mécanisme de rampe à billes (3).

4. Élément mécanique de blocage de retour selon l'une des revendications précédentes,
**caractérisé en ce que** le disque de friction (4) comprend une zone réalisée de préférence en forme de cylindre creux, qui s'appuie dans la direction radiale sur l'arbre.

5. Élément mécanique de blocage de retour selon l'une des revendications précédentes,
**caractérisé en ce que** le frein principal (2) et le frein continu (1) sont espacés l'un de l'autre dans la direction axiale de l'élément de blocage de retour.

6. Élément mécanique de blocage de retour selon l'une des revendications précédentes,
**caractérisé en ce que** la zone radialement extérieure du disque de friction (4) est conçue pour être en contact avec le frein principal (2) et le frein continu (1).

7. Élément mécanique de blocage de retour selon l'une des revendications précédentes,
**caractérisé en ce que** la zone radialement extérieure du disque de friction (4) présente la même position radiale que les billes du mécanisme de rampe à billes (3) et/ou les zones de contact du frein continu (1) et/ou du frein principal (2).

8. Élément mécanique de blocage de retour selon l'une des revendications précédentes,
**caractérisé en ce que** le frein continu (1) est couplé, par le biais d'une denture, à une partie du mécanisme de rampe à billes (3) et le frein principal (2) à une autre partie du mécanisme de rampe à billes.

9. Élément mécanique de blocage de retour selon l'une des revendications précédentes,
**caractérisé en ce que** le disque de friction (4) comprend une garniture de friction appliquée sur celui-ci.

10. Élément mécanique de blocage de retour selon l'une des revendications précédentes,
**caractérisé en ce que** le disque de friction (4) est fabriqué en bronze.

11. Élément mécanique de blocage de retour selon l'une des revendications précédentes,
**caractérisé en ce que** l'élément de blocage de retour est conçu de telle manière que la friction est proportionnelle au couple présent.

12. Élément mécanique de blocage de retour selon l'une des revendications précédentes,
**caractérisé en ce que** l'élément de blocage de retour est conçu de telle manière que la friction entre les parties de rampe à billes est appliquée sous la forme d'une friction continue.
